Europäisches Patentamt

European Patent Office

Office européen des brevets

(19)

(11) Veröffentlichungsnummer: **0 297 417 B1**

# EUROPÄISCHE PATENTSCHRIFT

(12)

(45) Veröffentlichungstag der Patentschrift :
07.08.91 Patentblatt 91/32

(21) Anmeldenummer : 88109959.2

(22) Anmeldetag : 23.06.88

(51) Int. Cl.⁵ : **C02F 3/00, C02F 3/08,**
**C02F 3/30, C02F 9/00,**
**C02F 1/78**

(54) Verfahren und Vorrichtung zur Beseitigung von Verunreinigungen im Boden.

(30) Priorität : 03.07.87 DE 3721981

(43) Veröffentlichungstag der Anmeldung :
04.01.89 Patentblatt 89/01

(45) Bekanntmachung des Hinweises auf die
Patenterteilung :
07.08.91 Patentblatt 91/32

(84) Benannte Vertragsstaaten :
BE CH DE FR GB IT LI NL

(56) Entgegenhaltungen :
EP-A- 0 054 248
EP-A- 0 182 380
EP-A- 0 279 719
FR-A- 1 557 156
US-A- 4 582 611
HANDBOEK BODEMSANERINGSTECHNIE-
KEN, 1985, Staatsuitgeverij, Den Haag, 162
Seiten
ABWASSERTECHNISCHE VEREINIGUNG:
"Lehr- und Handbuch der Abwassertechnik",
Auflage 3, Band 4: Biologisch-chemische und
weitergehende Abwasserreinigung, 1985, Seiten 1-660, Ernst & Sohn Verlag, Berlin, DE

(56) Entgegenhaltungen :
GWF-WASSER/ABWASSER, Band 125, Nr. 8,
1984, Seiten 366-373; G. BATTERMANN et al.:
"Beseitigung einer Untergrundkontamination
mit Kohlenwasserstoffen durch mikrobiellen
Abbau"
MINISTERIE VAN VOLKSHUISVESTING,
RUIMTELIJKE ORDENING EN MILIEUBE-
HEER, Februar 1986, 113 Seiten, Staatsdruk-
kerij- en Uitgeverijbedrijf/Distributiecentrum
Overheidspublikaties, Den Haag, NL;
"Behandeling percolatiewater stortterreinen
deel B: Behandeling door middel van ae-
roob-biologische en fysisch-chemische systemen"

(73) Patentinhaber : Norddeutsche Seekabelwerke
Aktiengesellschaft
Kabelstrasse
W-2890 Nordenham (DE)

(72) Erfinder : Sieksmeyer, Rolf, Dipl.-Ing
Oststrasse 13
W-2890 Nordenham (DE)
Erfinder : Mevius, Walter, Dr.
Rothestrasse 5 III
W-2000 Hamburg 50 (DE)

(74) Vertreter : Möller, Friedrich, Dipl.-Ing. et al
Meissner, Bolte & Partner Patentanwälte
Hollerallee 73
W-2800 Bremen 1 (DE)

## Beschreibung

Die Erfindung betrifft ein Verfahren zur Beseitigung von Verunreinigungen im Boden, insbesondere zur Grundwassersanierung, gemäß dem Oberbegriff des Anspruchs 1, und eine insbesondere zur Durchführung dieses Verfahrens dienende Vorrichtung gemäß dem Oberbegriff des Anspruchs 7.

Aufgrund des steigenden Umweltbewußtseins versucht man, bekanntgewordene Untergrundkontaminationen, insbesondere mit Kohlenwasserstoffen, zu beseitigen. Diese werden häufig beobachtet auf alten bzw. ehemaligen Geländen chemischer bzw. petrochemischer Fabriken, bei denen in der Vergangenheit kein oder nur wenig Wert auf die vollständige Verhinderung des Einsickerns von Schadstoffen in den Boden gelegt wurde. Dabei kam es zu Grundwasserkontaminationen. Hier eine Grundwassersanierung durchzuführen, ist außerordentlich schwierig. Insbesondere sind solche Sanierungsmaßnahmen nur langfristig mit einem erheblichen Aufwand durchzuführen. Als Faustregel kann angenommen werden, daß eine Grundwassersanierung etwa die gleiche Zeit in Anspruch nimmt, in der eine Verunreinigung des im Boden enthaltenen Grundwassers stattgefunden hat.

Ein bekanntes Sanierungsverfahren besteht darin, in verunreinigten Bereichen den Boden auszutauschen. Das führt jedoch lediglich zu einer Verlagerung des Problems auf Sonderdeponien. Auch die Kosten des Bodenaustausches sind außergewöhnlich hoch.

Weiterhin ist eine Bodenwäsche bzw. eine thermische Bodenbehandlung bekannt. Dieses Verfahren ist sehr aufwendig und kostenintensiv.

Ferner ist eine Sanierung durch Bodenluftabsaugung mit alternativer oder gleichzeitiger Grundwasserdesorption bekannt. Hier werden zur Reinigung der verunreinigten Bodenlußt bzw. die beim Strippen des verunreinigten Grundwassers entstehende Abluft in Aktivkohlefiltern gereinigt. Dadurch tritt lediglich eine Problemverlagerung auf die Aktivkohle ein. Diese muß nämlich wiederum auf Sonderdeponien gelagert werden. Im übrigen ist dieses Verfahren sehr zeitaufwendig. Es erfordert darüber hinaus einen hohen apparativen und energetischen Aufwand.

Schließlich sind aus dem niederländischen Fachbuch "Handboek bodemsaneringstechnieken", Ausgabe Juli 1983, verschiedene Verfahren zum Durchspülen kontaminierter Böden bekannt. Die unterschiedlichen Verfahren werden als alternative Behandlungsmöglichkeiten beschrieben, wobei für besonders verunreinigtes Grundwasser eine chemische Behandlung vorgeschlagen wird, die aufgrund der erforderlichen Chemikalien nur zu einer Problemverlagerung fürt. Ausgehend vom Stand der Technik liegt der Erfindung die Aufgabe zugrunde, ein Verfahren und eine Vorrichtung der eingangs genannten Art zu schaffen, welche mit geringem Aufwand unter Einsatz lediglich biologischer Behandlungsmethoden, ohne eine Schadstoffverlagerung, arbeiten.

Die verfahrensgemäße Lösung weist die Maßnahmen des Anspruchs 1 auf. Die erfindungsgemäße Kombination geeigneter und aufeinander abgestimmter biologischer Behandlungsverfahren ermöglicht auch den Abbau starker Verunreinigungen, zu deren Beseitigung bisher, die Umwelt belastende chemische Behandlungen notwendig waren. Hierzu sind in der ersten Verfahrensstufe Tropfkörper oder Tauchtrommelreaktoren vorgesehen, deren Einsatz bereits einen relativ hohen Reinheitsgrad des (Grund-)Wassers ermöglicht, und in der zweiten Verfahrensstufe, also unmittelbar vor oder während der Zurückleitung des (Grund-)Wassers in den Boden, ein biologischer Langsamfilter zum Abbau schwer löslicher Restverunreinigungen. Bei der biologischen Reinigung werden die dem Wasser entzogenen Stoffe, und zwar die besonders schwer abbaubaren halogenierten Kohlenwasserstoffe, praktisch restlos abgebaut. Es fallen dadurch hierbei keinerlei Sekundärstoffe an, die einer Entsorgung bedürfen, also auf Sondermülldeponien endgelagert werden müssen. Eine Schadstoffverlagerung, wie es bei den bereits bekannten Verfahren dieser Art vielfach notwendig ist, findet somit beim erfindungsgemäßen Verfahren nicht statt.

Nach einem vorteilhaften Vorschlag der Erfindung ist der biologisch arbeitende Langsamfilter mit einer Langzeitbiologie besiedelt. In diesem Langzeitfilter werden die Restverunreinigungen ohne irgendwelche Energiezufuhr von außen praktisch beim Zurückleiten des Wasserss in den Boden gereinigt.

Zweckmäßigerweise erfolgt die biologische Reinigung in den Tropfkörpern bzw. Tauchtrommelreaktoren in aufeinanderfolgenden anaeroben und aeroben Biostufen, die apparativ zusammengefaßt sind. Diese Anlagen lassen sich dem jeweiligen Sanierungsfall anpassen, sind kompakt und mit geringem Energieaufwand zu betreiben. Das letztgenannte Kriterium ist besonders wichtig, da erfahrungsgemäß derartige Sanierungsmaßnahmen einen Zeitraum von mehreren Jahren in Anspruch nehmen.

Besonders vorteilhaft ist es, daß die Entnahmestelle und die Zuführstelle derart auseinandergelegt werden, daß das wieder in den Boden eingeleitete gereinigte Wasser auf dem Weg zur erneuten Entnahme in Richtung des (Grund-)Wasserstroms fließt. Hierdurch entsteht ein besonders effektiver Spülfluß, der zusammen mit der überirdischen Anordnung der Reinigungs- bzw. Filtrationsorgane einen geschlossenen Kreislauf bildet.

Die vorrichtungsmäßige Lösung der Erfindung verfügt über die Merkmale des Anspruchs 7. Durch die Ver-

EP 0 297 417 B1

wendung von Tauchtrommelreaktoren, die apparativ zusammengefaßt sind, verfügt die biologische Reinigungsanlage über sehr kompakte Abmessungen. Sie ist daher leicht transportabel, also am Sanierungsort leicht auf- und abbaubar. Insbesondere läßt sich die Reinigungsanlage leicht in genormten Großraumbehältern (Containern) unterbringen, die ohne nennenswerten baulichen Aufwand problemlos vor Ort installiert werden können. Hierzu trägt auch die Anordnung des Langsamfilters im Rückleitungsorgan bei.

Wegen der vorteilhaften Anordnung des Langsamfilters in Durchflußrichtung gesehen hinter einem mechanischen Filter werden grobe Verunreinigungen vom Langsamfilter ferngehalten.

Weitere Merkmale der Erfindung beziehen sich auf die Ausbildung des Langsamfilters zur Elimination der Restverunreinigungen. Dieses ist erfindungsgemäß als ein teichartiges Sickerbecken ausgebildet, welches zum einen leicht herstellbar ist, nämlich lediglich einen Bodenaushub erfordert ggf. mit einer Schüttung aus einer Filterschicht, insbesondere Kies, und eventuell einer Folie zur Abdeckung der Seitenwandungen und/oder des Bodens versehen ist, welche wenigstens im Bereich des Bodens wasserdurchlässig ist. Hierin wird dann eine Langzeitbiologie angesiedelt, die eine langsame Elimination schwer löslicher Restverunreinigungen bewirkt, und zwar ohne irgendwelche bewegten Teile im Sickerbecken, so daß für die Beseitigung der Restverunreinigungen kein zusätzlicher Energieaufwand erforderlich ist. Darüber hinaus kann die Wasseraufnahmekapazität des Langzeitfilters, also des Sickerbeckens, ausreichend groß bemessen werden, um bei möglichen Funktionsstörungen in der Reinigungsanlage eine kontinuierliche weitergehende Zurückleitung des gereinigten Wassers zu gewährleisten, wodurch der Spülfluß im Boden stets aufrechterhalten bleibt. Das Spülbecken kann darüber hinaus ohne nennenswerte Kosten ausreichend groß bemessen werden, um zum einen eine ausreichend lange Verweilzeit des nachzureinigenden Wassers hierin zu gewährleisten und andererseits einen Zwischenspeicher zu bilden, für den Fall, daß zwischenzeitlich die biologische Reinigungsanlage einen größeren Ausstoß an biologisch gereinigtem Wasser hat als durch das Sickerbecken in den Boden zurücksickern kann.

Ein Ausführungsbeispiel der erfindungsgemäßen Vorrichtung und des Verfahrensablaufs derselben werden nachfolgend anhand der Zeichnungen näher erläutert.

Es zeigen :

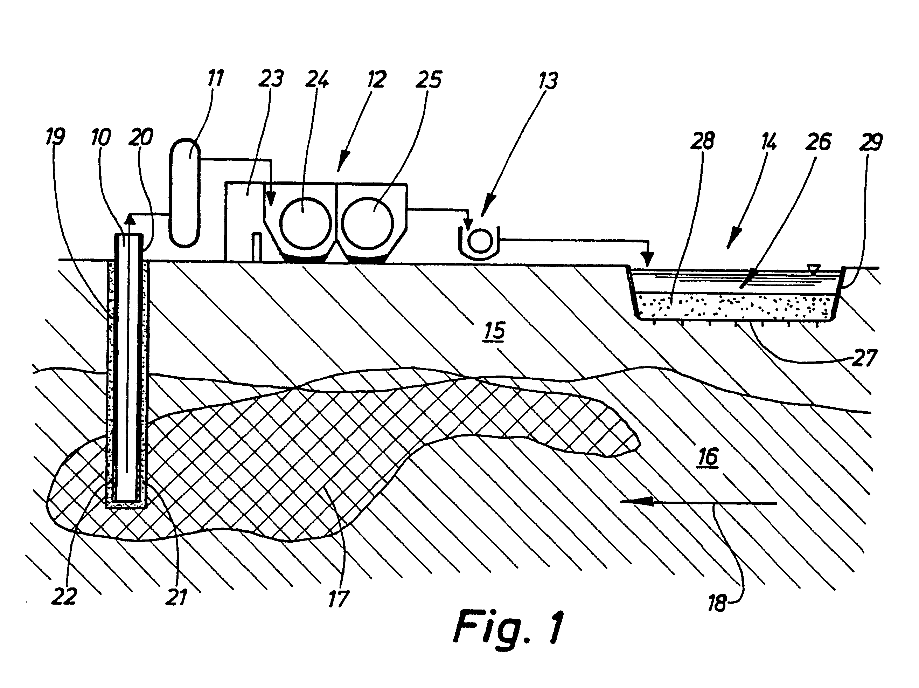

Fig. 1    eine schematische Gesamtansicht der Vorrichtung mit einem vertikalen Schnitt durch das Sanierungsgebiet,

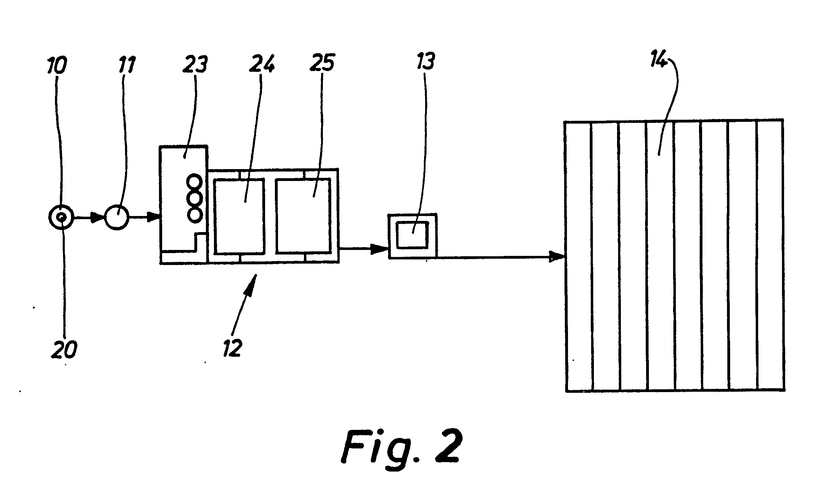

Fig. 2    eine Grundrißdarstellung der Vorrichtung gemäß der Fig. 1,

Fig. 3    einen Querschnitt durch ein Sickerbecken,

Fig. 4    einen Querschnitt durch eine alternative Ausführungsform des Sickerbeckens.

Die hier gezeigte Vorrichtung dient zur Grundwassersanierung, und zwar insbesonder zur Beseitigung von Kohlenwasserstoffen aus dem Grundwasser.

Die Vorrichtung verfügt über einen Grundwasserabzugsschacht in Form eines Tiefbrunnens 10, eine Ozonungseinrichtung 11, eine biologische Reinigungsanlage 12, ein mechanisches Trommelbandfilter 13 und ein Langsamfilter 14.

Die Bodenstruktur läßt im hier gezeigten Falle eine obere wasserungesättigte Zone 15, eine darunterliegende (eng schraffierte) wassergesättigte Zone 16 und eine in der letzteren sich befindende (karierte) verunreinigte Zone 17 erkennen. Die Grundwasserströmungsrichtung 18 markiert der in der wassergesättigten Zone 16 eingezeichnete Pfeil.

Der Tiefbrunnen 10 besteht im hier gezeigten Ausführungsbeispiel aus einem in eine entsprechende Erdbohrung 19 eingelassenes Filterrohr 20, dessen Außenmantel von einer Kiesschüttung 21 umgeben ist, die den Freiraum zwischen der Erdbohrung 19 und das im Durchmesser entsprechend kleiner bemessene Filterrohr 20 ausfüllt. Der Tiefbrunnen 10 ist derart im Boden eingebracht, daß er in den in bezug auf die Grundwasserströmungsrichtung 18 vornliegenden Zipfel der verunreinigten Zone 17 mündet, wobei der Tiefbrunnen 10 soweit in den Boden hineinragt, daß er im unteren Bereich der verunreinigten Zone 17 endet. Das Filterrohr 20 ist im vorliegenden Ausführungsbeispiel nur in demjenigen unteren Endbereich mit Öffnungen 22 zum Eintritt des zu reinigenden Wassers versehen, der sich in der verunreinigten Zone 17 befindet. Der übrige, hochführende Restbereich des Filterrohrs 20 ist im vorliegenden Ausführungsbeispiel geschlossen ausgebildet. Es ist aber zur einfacheren Ausbildung des Filterrohrs 20 auch denkbar, dieses über einen größeren Längenbereich bzw. vollständig mit Öffnungen 22 zu versehen.

Das aus dem Tiefbrunnen 10 durch eine in den Figuren nicht gezeigte Pumpanlage aus dem Boden abgezogene verunreinigte Wasser wird im vorliegenden Ausführungsbeispiel zunächst der Ozonungseinrichtung 11 zugeleitet. Diese dient zur oxydativen Aufspaltung schwer abbaubarer Substanzen, um diese der biologischen Reinigung leichter zugänglich zu machen.

Die der Ozonungseinrichtung 11 nachgeordnete biologische Reinigungsanlage 12 verfügt im vorliegenden Ausführungsbeispiel über eine Dosierstation 23, von der aus das biologisch zu reinigende Wasser nacheinander zwei, im vorliegenden Ausführungsbeispiel nebeneinanderliegenden Tropfkörpern, nämlich rotierenden,

3

zylindrischen Tauchtrommelreaktoren 24 und 25 zugeführt wird. Der erste Tauchtrommelreaktor 24 bildet eine erste, anaerobe Biostufe, in der eine Behandlung des zu reinigenden Wassers in gasdichter Umgebung erfolgt zum mikrobiellen Abbau der Schadstoffe, insbesondere von Kohlenwasserstoffen. Der zweite Tauchtrommelreaktor 25 ist als aerobe Biostufe ausgebildet, in der unter Sauerstoffzufuhr überschüssige Sekundärstoffe aus der ersten anaeroben Biostufe eliminiert werden. Alternativ kann die biologische Reinigungsanlage 12 auch über einen Aufbau verfügen, wie er aus den Deutschen Offenlegungsschriften 3447177 und 3537307 hervorgeht.

Im Anschluß an die biologische Reinigung des Wassers erfolgt eine mechanische Filtration, und zwar im vorliegenden Fall durch ein der biologischen Reinigungsanlage nachgeordnetes mechanisches Trommelbandfilter 13.

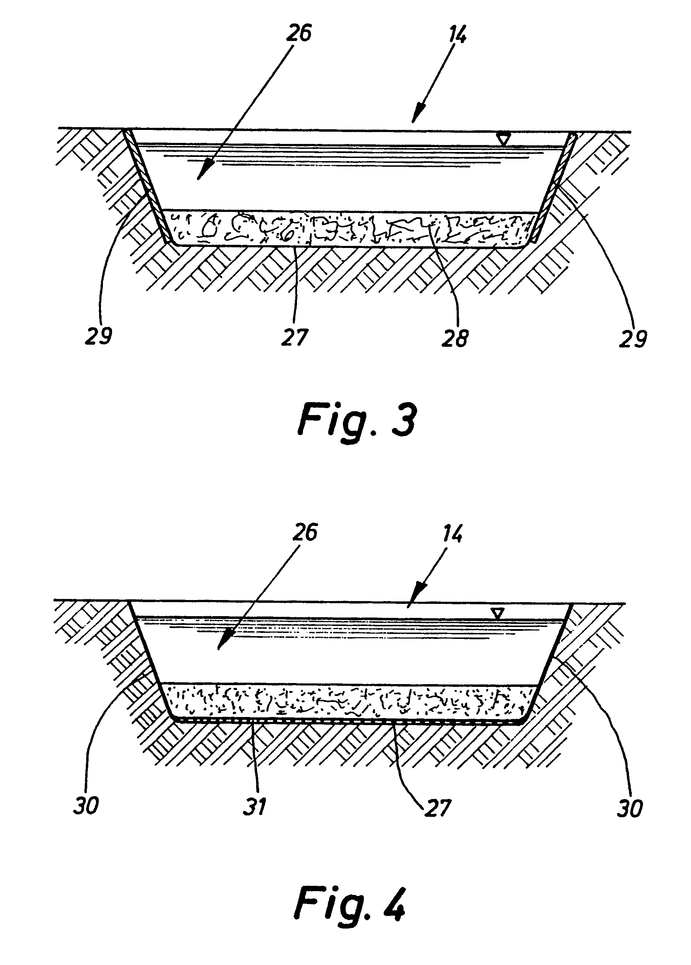

Das dem Trommelbandfilter 13 nachgeordnete Langsamfilter 14 kann über einen Aufbau verfügen, wie er in den Fig. 3 bzw. 4 dargestellt ist. In beiden Fällen ist das Langsamfilter 14 teichförmig ausgebildet, besteht nämlich aus einem in den Boden eingelassenen Sickerbecken 26 mit einer im gezeigten Ausführungsbeispiel rechteckigen Grundfläche. Das Sickerbecken 26 kann aber genauso über andere, beispielsweise eine kreisförmige Grundfläche verfügen. Die beiden hier gezeigten Ausführungsformen der Langsamfilter 14 sind im Bereich ihres Bodens 27 wasserdurchlässig ausgebildet. Das im Langsamfilter 14 befindliche Wasser kann somit durch den Boden 27 im Erdreich versickern. Als Filtermaterial dient in beiden Fällen eine den Boden 27 vollständig abdeckende Filterschicht 28, die einfachstenfalls aus einer Kiesschüttung bestehen kann, in der eine Langzeitbiologie angesiedelt ist. Die Wandungen 29 des Sickerbeckens 26 sind geneigt, und zwar derart, daß einander gegenüberliegende Wandungen 29 zum Boden 27 hin konvergierend verlaufen.

Im Ausführungsbeispiel der Fig. 3 sind die Wandungen 29 ringsherum wasserundurchlässig ausgebildet, nämlich durch wasserdicht miteinander verbundene Platten oder eine durchgehende Betonschicht abgedeckt. Diese gewährt eine Stützung des Erdreichs im Bereich der Wandungen 29. In diesem Fall ist es daher auch möglich, die Wandungen 29 senkrecht verlaufen zu lassen. Der Boden 27 des Sickerbeckens 26 ist in diesem Ausführungsbeispiel lediglich durch die Filterschicht 28 abgedeckt. Es steht so die gesamte Bodenfläche zum Versickern des gereinigten Wassers ins Erdreich zur Verfügung.

Das Sickerbecken der Fig. 4 ist vollständig durch eine Folie 30 ausgekleidet. Diese ist im Bereich der Wandungen 29 wasserundurchlässig, während im Bereich des Bodens 27 die Folie 30 wasserdurchlässig ausgebildet ist, wozu die Folie 30 in diesem Bereich mit rasterförmig auf die Fläche des Bodens 27 verteilten Löchern 31 versehen ist. Alternativ kann die Folie im Bereich des Bodens 27 auch aus einem Textilmaterial bestehen, welches wasserdurchlässig ist. In diesem Falle kann ggf. die Filterschicht 28 im Sickerbekken 26 entfallen, d.h. das textile Geflecht im Bereich des Bodens 27 mit darauf angesiedelten Bakterien unmittelbar als Filter dienen.

Weiterhin ist es möglich, das Sickerbecken 26 nur im Bereich der Wandungen 29 mit einer Folienauskleidung zu versehen. Der Boden 27 ist dann wieder — wie im Ausführungsbeispiel der Fig. 3 — lediglich durch die Filterschicht 28 abgedeckt.

Die Anordnung des Langsamfilters 14 erfolgt zweckmäßigerweise in bezug auf die Grundwasserströmungsrichtung 18 vor der verunreinigten Zone 17, also im Bereich des dem Tiefbrunnen 14 gegenüberliegenden Endes der verunreinigten Zone 17.

Nachfolgend wird die Funktionsweise der beschriebenen Vorrichtung hinsichtlich des Verfahrensablaufs, insbesondere beim Spülen, näher beschrieben :

Durch die Entnahme des zu reinigenden Wassers und die Wiedereinleitung in das Erdreich an definierten Stellen zur verunreinigten Zone 17 entstehen im Erdreich Spülströmungen in im wesentlichen zwei unterschiedlichen Richtungen. Durch das Abziehen des zu reinigenden Wassers durch den Tiefbrunnen 10 erfolgt eine Grundwasserabsenkung, wodurch das Wiedereinsickern des gereinigten Wassers durch das Langsamfilter 14 in das zu sanierende Erdreich begünstigt wird. Außerdem wird durch die Grundwasserabsenkung die Grundwasserströmung, nämlich in die Grundwasserströmungsrichtung 18, begünstigt. Diese wird noch dadurch verstärkt, daß die Entnahme des zu behandelnden Wassers durch den Tiefbrunnen 10 an der in Grundwasserströmungsrichtung 18 vornliegenden Spitze der verunreinigten Zone 17 erfolgt, während die Einleitung des gereinigten Wasser durch das Langsamfilter 14 in bezug auf die Grundwasserströmungsrichtung 18 vor der verunreinigten Zone 17 erfolgt. Es fließt nämlich so von der Stelle der Einleitung des gereinigten Wassers in das Erdreich bis zur erneuten Entnahme durch den Tiefbrunnen 10 in die Grundwasserströmungsrichtung 18.

Bei der überirdischen Reinigung des verunreinigten Grundwassers wird der Abstand zwischen dem Tiefbrunnen 10 und dem Langsamfilter 14 überbrückt, indem längs der Ozonungseinrichtung 11, der biologischen Reinigungsanlage 12, des mechanischen Trommelbandfilters 13 und des Langsamfilters 14 das Wasser in entgegengesetzte Richtung zur Grundwasserströmungsrichtung 18 transportiert wird.

Der Verfahrensablauf in der biologischen Reinigungsanlage 12 entspricht demjenigen, wie er beispielsweise aus den Deutschen Offenlegungsschriften 3442510 und 3537307 bekannt geworden ist.

**Patentansprüche**

1. Verfahren zur Beseitigung von Verunreinigungen im Boden, insbesondere zur Grundwassersanierung, wobei zum Durchspülen des Bodens aus demselben (Grund-)Wasser abgezogen, überirdisch biologisch gereinigt und wieder in den Boden eingeleitet wird, **dadurch gekennzeichnet,** daß die biologische Reinigung des (Grund-)Wassers zunächst in Tropfkörpern oder Tauchtrommelreaktoren (24) und unmittelbar vor oder während der Zurückleitung des (Grund-)Wassers in den Boden in einem biologischen Filter (Langsamfilter 14) zum Abbau schwer löslicher Restverunreinigungen erfolgt.

2. Verfahren nach Anspruch 1, dadurch gekennzeichnet, daß das Filter als ein eine Langzeitbiologie aufweisendes Langsamfilter (14) ausgebildet ist.

3. Verfahren nach Anspruch 1 oder 2, dadurch gekennzeichnet, daß die biologische Reinigung in den Tropfkörpern bzw. Tauchtrommelreaktoren mit apparativ zusammengefaßten, aufeinanderfolgenden anaeroben und aeroben Biostufen durchgeführt wird.

4. Verfahren nach einem oder mehreren der Ansprüche 1 bis 3, dadurch gekennzeichnet, daß vor der biologischen Reinigung eine Ozonung vorgenommen wird.

5. Verfahren nach einem oder mehreren der Ansprüche 1 bis 4, dadurch gekennzeichnet, daß nach der biologischen Reinigung in den Tropfkörpern bzw. Tauchtrommelreaktoren (24) die entstandenen Feststoffe, insbesondere abgebaute Biomasse, mechanisch ausgefiltert werden.

6. Verfahren nach Anspruch 1 sowie einem oder mehreren der weiteren Ansprüche, dadurch gekennzeichnet, daß die Einleitung des gereinigten Wassers in den Boden an einer derartigen (anderen) Stelle (als das Abziehen des (Grund-)Wassers aus dem Boden) erfolgt, daß das gereinigte Wasser beim Einsickern in den Boden kontinuierlich in die Grundwasserströmungsrichtung (18) fließt.

7. Vorrichtung zur Beseitigung von Verunreinigungen im Boden (27), insbesondere zur Grundwassersanierung, mit mindestens einem im Boden (27) eingelassenen (Grund-)Wasserabzugsschacht, einer überirdischen Pumpanlage, einer biologischen Reinigungsanlage (12) für das (Grund-)Wasser und einem Rückleitungsorgan für das gereinigte Wasser in den Boden (27), insbesondere zur Durchführung des Verfahrens nach einem oder mehreren der Ansprüche 1 bis 6, dadurch gekennzeichnet, daß die Reinigungsanlage (12) aus wenigstens zwei apparativ zusammengefaßten, biologisch arbeitenden Tropfkörpern oder Tauchtrommelreaktoren (24) besteht, und das Rückleitungsorgan mindestens ein mit einer Langzeitbiologie versehenes Langsamfilter (14) aufweist.

8. Vorrichtung nach Anspruch 7, dadurch gekennzeichnet, daß der biologischen Reinigungsanlage (12) eine Ozonungseinrichtung (11) vor- und/oder ein mechanisches Filter (Trommelbandfilter 13) nachgeordnet ist bzw. sind, wobei die Ozonungseinrichtung (11) und/oder das mechanische Filter (Trommelbandfilter 13) in die biologische Reinigungsanlage (12) integriert ist bzw. sind.

9. Vorrichtung nach Anspruch 7 oder 8, dadurch gekennzeichnet, daß das Langsamfilter (14) dem mechanischen Filter (Trommelbandfilter 13) nachgeordnet ist.

10. Vorrichtung nach Anspruch 7 sowie einem oder mehreren der weiteren Ansprüche, dadurch gekennzeichnet, daß das Langsamfilter (14) als ein im Boden eingelassenes Sickerbecken (26) ausgebildet ist und wenigstens der Boden (27) des Sickerbeckens (26) wasserdurchlässig ist, vorzugsweise über eine Filterschicht (28) aus insbesondere einer Kiesschüttung verfügt.

11. Vorrichtung nach Anspruch 10, dadurch gekennzeichnet, daß das Sickerbecken (26) mit einer durchgehenden Folie (30) ausgekleidet ist, die wenigstens im Bereich des Bodens (27) wasserdurchlässig ist und auf der die Langzeitbiologie angesiedelt ist.

**Claims**

1. Process for removing soil contaminants, in particular for the purification of ground water, where, in order to flush the soil through, (ground)water is withdrawn from the soil, biologically treated above ground and re-introduced into the soil, characterised in that the biological treatment of the (ground) water is carried out first in percolating filters or immersed drum reactors (24) and, just before or during the reintroduction of the (ground)water into the soil, in a biological filter (slow filter 14) for degradation of sparingly soluble residual contaminants.

2. Process according to Claim 1, characterised in that the biological filter is a slow filter (14) containing a long-lived biosystem.

3. Process according to Claim 1 or 2, characterised in that the biological treatment in the percolating filters or immersed drum reactors is carried out consecutively in an anaerobic and in an aerobic biostep, the equipment for which is combined.

4. Process according to one or more of Claims 1 to 3, characterised in that the biological treatment is preceded by ozonisation.

5. Process according to one or more of Claims 1 to 4, characterised in that, after the biological treatment in the percolating filters or immersed drum reactors (24), the resultant solids, in particular degraded biomass, are filtered out mechanically.

6. Process according to Claim 1 and one or more of the further claims, characterised in that the treated water is introduced into the soil at such a point (different from that from where the (ground) water is removed from the soil) that the treated water flows continuously in the ground-water flow direction (18) on soaking into the soil.

7. Plant for removing contaminants from soil (27), in particular for the purification of ground water, having at least one (ground) water withdrawal shaft sunk into the soil (27), above-ground pumping equipment, a biological treament plant (12) for the (ground) water and a means for returning the treated water into the soil (27), in particular for carrying out the process according to one or more of Claims 1 to 6, characterised in that the treatment plant (12) comprises at least two biologically operating percolating filters or immersed drum reactors (24), the equipment for which is combined, and the means for returning the treated water into the soil has a slow filter (14) containing a long-lived biosystem.

8. Plant according to Claim 7, characterised in that the biological treatment plant (12) is downstream of an ozonisation unit (11) and/or upstream of a mechanical filter (belt-discharge drum filter 13), the ozonisation unit (11) and/or the mechanical filter (belt-discharge filter 13) being integrated into the biological treatment plant (12).

9. Plant according to Claim 7 or 8, characterised in that the slow filter (14) is downstream of the mechanical filter (belt-discharge drum filter 13).

10. Plant according to Claim 7 and one or more of the further claims, characterised in that the slow filter (14) is designed as a percolation basin (16) sunk into the soil, and at least the soil (17) in the percolation basin (16) is water-permeable, and preferably has a filter layer (18) consisting of, in particular, a gravel bed.

11. Plant according to Claim 10, characterised in that the percolation basin (26) is lined with continuous sheeting (30) which is water-permeable, at least in the region of the soil (27), and has been colonised by the long-lived biosystem.

## Revendications

1. Procédé d'élimination de pollutions du sol, en particulier pour l'assainissement d'eau souterraine, dans lequel de l'eau (souterraine) est, pour le rinçage du sol, soutirée de ce dernier, épurée en surface par voie biologique et réintroduite dans le sol, caractérisé en ce que l'épuration biologique de l'eau (souterraine) a lieu tout d'abord dans des corps de percolation ou réacteurs à cylindre plongeur (24) et, directement avant ou pendant la reconduction de l'eau (souterraine) dans le sol, dans un filtre biologique (filtre lent 14) destiné à la dégradation des impuretés résiduaires difficilement solubles.

2. Procédé suivant la revendication 1, caractérisé en ce que le filtre est réalisé sous la forme d'un filtre lent (14) présentant un milieu biologique de longue durée.

3. Procédé suivant l'une des revendications 1 et 2, caractérisé en ce que l'épuration biologique dans les corps de percolation ou respectivement réacteurs à cylindre plongeur est effectuée avec des étages biologiques successifs en anaérobie et en aérobie qui sont réunis en un appareil.

4. Procédé suivant une ou plusieurs des revendications 1 à 3, caractérisé en ce qu'une ozonisation est effectuée avant l'épuration biologique.

5. Procédé suivant une ou plusieurs des revendications 1 à 4, caractérisé en ce que, après l'épuration biologique dans les corps de percolation ou réacteurs à cylindre plongeur (24), les substances solides obtenues, en particulier la biomasse dégradée, sont séparées par filtrage mécanique.

6. Procédé suivant la revendication 1 ainsi que suivant une ou plusieurs des autres revendications, caractérisé en ce que l'introduction de l'eau purifiée dans le sol a lieu en un (autre) emplacement (que le soutirage de l'eau (souterraine) hors du sol) de telle façon que l'eau épurée s'écoule, lors de l'infiltration dans le sol, de manière continue dans le sens (18) de l'écoulement de l'eau souterraine.

7. Dispositif pour l'élimination de pollutions du sol (27), en particulier pour l'assainissement d'eau souterraine, comprenant au moins un puits de soutirage d'eau (souterraine) pratiqué dans le sol (27), une installation de pompage en surface, une installation d'épuration biologique (12) pour l'eau (souterraine) et un organe de reconduction de l'eau purifiée dans le sol (27), en particulier pour la mise en oeuvre du procédé suivant une ou plusieurs des revendications 1 à 6, caractérisé en ce que l'installation d'épuration (12) est constituée d'au moins deux corps de percolation ou réacteurs à cylindre plongeur (24) qui fonctionnent biologiquement et sont

EP 0 297 417 B1

réunis en un appareil et en ce que l'organe de reconduction présente au moins un filtre lent (14) pourvu d'un milieu biologique de longue durée.

8. Dispositif suivant la revendication 7, caractérisé en ce qu'un dispositif d'ozonisation (11) est agencé en amont de l'installation d'épuration biologique (12) et/ou un filtre mécanique (filtre à tambour 13) est agencé en aval de celle-ci, le dispositif d'ozonisation (11) et/ou le filtre mécanique (filtre à tambour 13) étant intégrés dans l'installation d'épuration biologique (12).

9. Dispositif suivant l'une des revendications 7 et 8, caractérisé en ce que le filtre lent (14) est agencé en aval du filtre mécanique (filtre à tambour 13).

10. Dispositif suivant la revendication 7 ainsi que suivant une ou plusieurs des autres revendications, caractérisé en ce que le filtre lent (14) est réalisé sous la forme d'un bassin d'infiltration (26) creusé dans le sol et en ce qu'au moins le fond (27) du bassin d'infiltration (26) est perméable à l'eau, en disposant de préférence d'une couche filtrante (28) en particulier en un remblai de gravier.

11. Dispositif suivant la revendication 10, caractérisé en ce que le bassin d'infiltration (26) est revêtu d'une feuille continue (30) qui, au moins dans la zone du fond (27), est perméable à l'eau et est colonisée par le milieu biologique de longue durée.

7

Fig. 1

Fig. 2

EP 0 297 417 B1

Fig. 3

Fig. 4